# EUROPEAN PATENT SPECIFICATION

(11) **EP 3 023 218 B1**
(45) Date of publication and mention of the grant of the patent: **28.03.2018**
(21) Application number: 14003932.2
(22) Date of filing: 21.11.2014
(51) Int. Cl.: B29C 45/14, B29C 45/00, B65D 5/20

(54) **A method for manufacturing of a package container**
Verfahren zur Herstellung eines Verpackungsbehälters
Procédé de fabrication d'un récipient d'emballage

(43) Date of publication of application: 25.05.2016
(73) Proprietor: Topcap AB, 644 36 Torshälla (SE)
(72) Inventor: Johansson, Einar, S-184 30 Åkersberga (SE)
(74) Representative: Bjelkstam, Peter

(56) References cited:
- WO-A1-2012/022672
- WO-A2-2009/086501
- GB-A- 1 348 370
- GB-A- 1 502 266
- GB-A- 1 504 527
- GB-A- 1 570 393
- JP-A- H03 197 109
- JP-A- 2002 225 828
- US-A1- 2011 065 556

## Description

The invention relates to a method for manufacturing a packaging container consisting of a cardboard bottom and from this bottom up-folded side walls which when erected are orientated and fixed relative to each other by means of liquid tight joints.

The background to the present invention is that there is a market need to replace plastic cups for ice cream, creme fraiche, yoghurt and similar products, with cups that are made of more renewable raw materials and thus provide less contribution of greenhouse gases, i.e. more environmentally friendly cups and pots. Furthermore, it is common with lower environmental fees on packaging that consists of at least 50% cardboard, which also creates incentives for such cups. Today the market place does not offer such liquid tight cups, the ones which do exist are plastic cups placed into cardboard sleeves, which results in higher manufacturing cost, and also uses more plastic, or they perform poorly in modern automatic filling lines.

The drawback of manufacturing a packaging container consisting of a cardboard bottom and from this bottom up-folded side walls, is that the ends of the side walls when exposed in an open cavity of an injection mold tool, in which the plastic mass forming the sealing joints is filled, is that the ends of the side walls can easily be pressed and pushed away by the plastic flow towards the inside or the outside of the cavity. It is sufficient with only a small difference in the cavities free flow channels resulting in displacement of the ends of the side walls, resulting in a packaging container with appearance defects. An unsymmetrical flooding of the plastic mass, resulting in such appearance defects, is due to that the plastic mass is injected at high pressure which pushes the side wall ends to one or the other side of the cavity in the injection mold-tool. Manufacturing methods previously known from GB 1 570 393 A and GB 1 504 527 A disclose the features of the preamble of claim 1. An object with the present invention is to eliminate the drawbacks mentioned above by a new method. The characterizing features of the invention are stated in the appended claim. Thanks to the invention it has now been provided for a method for manufacturing a packaging container of the kind mentioned above, which in an excellent way fulfills its purpose at the same time as the packaging container is both cheap and easy to manufacture. The packaging container, which by its conicity is stackable with equally shaped containers, consists of a cardboard based packaging material, preferably at least on one side coated with a heat sealable layer. The side joints are connectable in a liquid-tight manner by a melt consisting of preferably thermoplastic, while its top side comprises a circumferential opening edge along the container opening, which also is formed by e.g. thermoplastic. A solution to the above mentioned problem with the side wall ends moving inside of a cavity, is to arrange so that the packaging container have the side walls with its ends to rest directly rather than indirectly as previously, against the injection mold tool during the forming of the packaging. The plastic mass is filled only on the inside of the side walls and between the joints but not at the outside of the side walls. Thereby the packaging material is pressed towards the mold tool outer half by the force of the plastic mass and a stabilization of the entire packaging container position is obtained. The plastic mass creates a pressure against the packaging material so that the packaging material with great force is held in place towards the outer half of the injection mold tool. This in turn means that the plastic mass can completely fill the cavities between the side wall ends and on their inside, for creating the side wall joints, without any plastic mass entering to the outside of the side walls, so that no appearance defects occur.

The invention is described closer below by the aid of some preferred embodiments with reference to the accompanying drawings, in which
- Fig. 1: shows a perspective view of a packing container obtained with the method according to the invention.
- Fig. 1b: shows a perspective view of a rectangular execution of the packaging container illustrated in Fig.1,
- Fig. 2: shows separately in perspective a shell or strip formation of the thermoplastic mass contained in the Fig. 1 illustrated packaging container, and which is intended to form the liquid-tight joints to hold together the same,

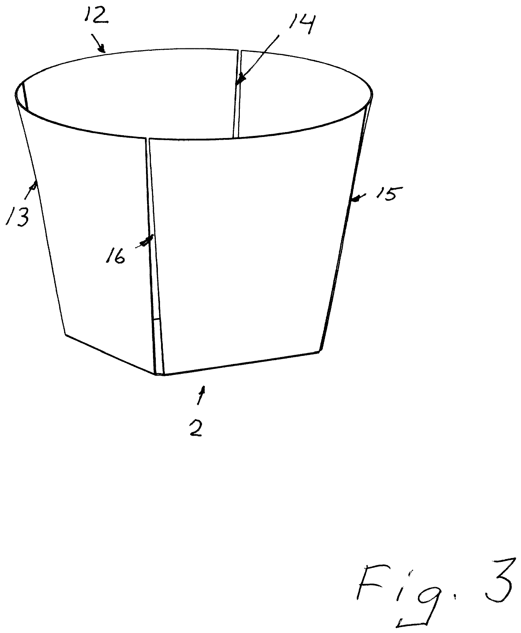

- Fig. 3: shows separately in a perspective view actual fiber based packaging laminate in an erected and formed state, and which is included in that of Fig. 1 illustrated packing container,

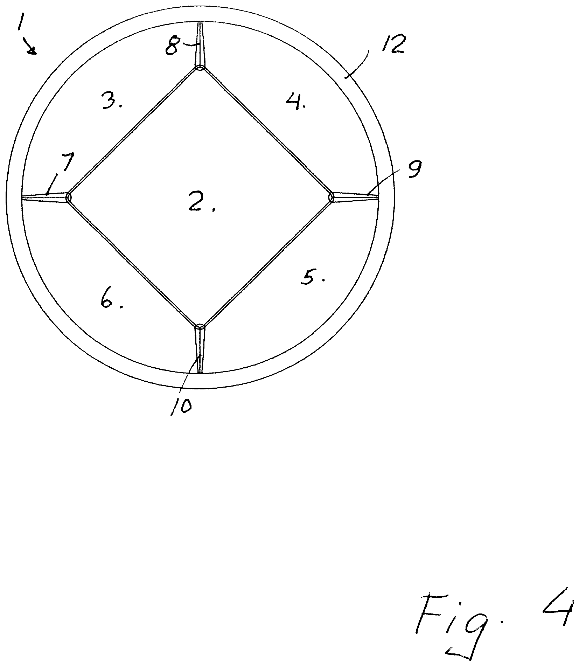

- Fig. 4: shows the packaging container illustrated in Fig.1 in a view from below,

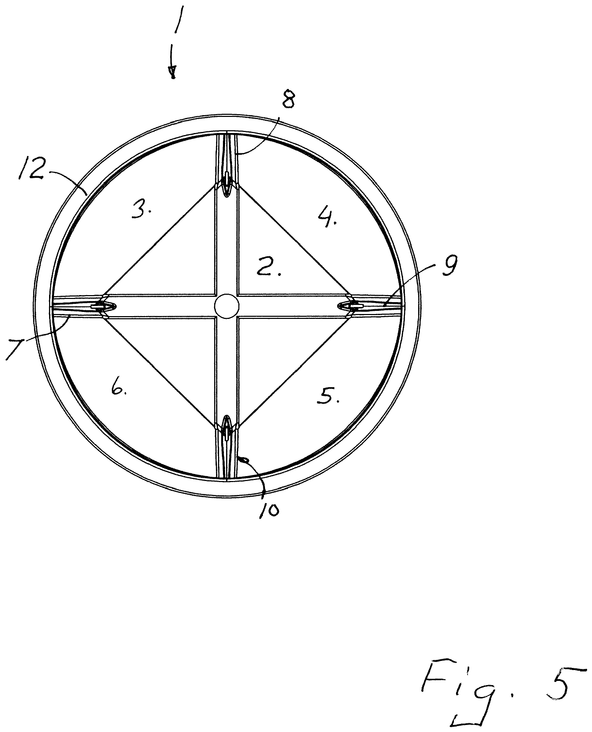

- Fig. 5: shows the packaging container illustrated in Fig.1 in a view from above,
- Fig. 6: shows schematically a partial sectional view of an injection mold used in the method according to the invention with their halves in a position with the packaging material fixed between these,
- Fig. 7: shows a schematic partial cross sectional view of an existing, prior known, injection mold design, and with which follows the disadvantages as described, and
- Fig. 8: shows schematically one joint area of the packaging container, where incoming plastic melt flow divided from one incoming main flow into two flow channels.

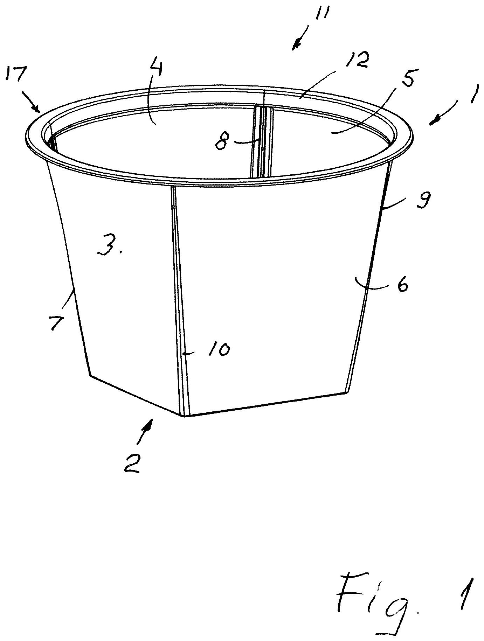

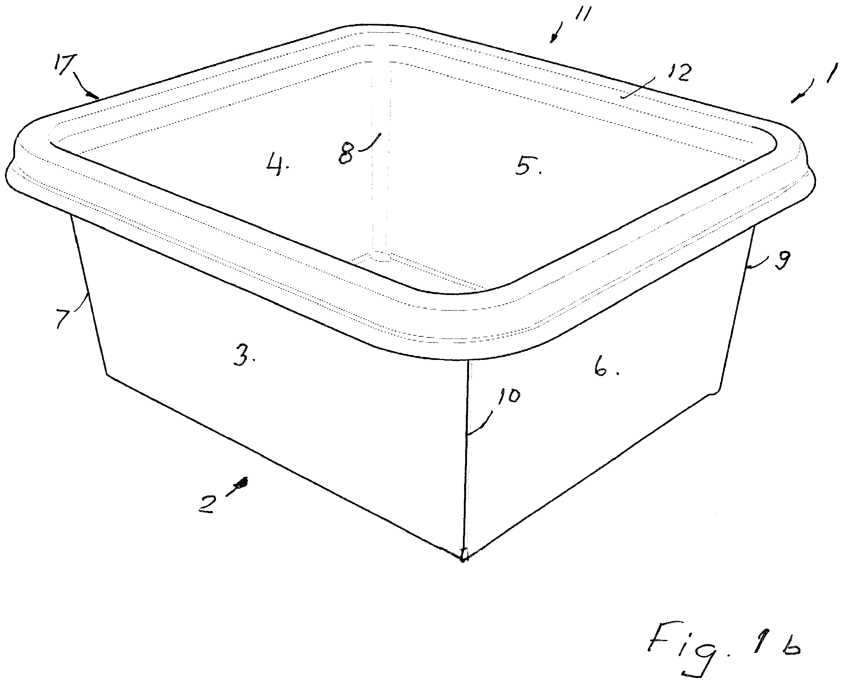

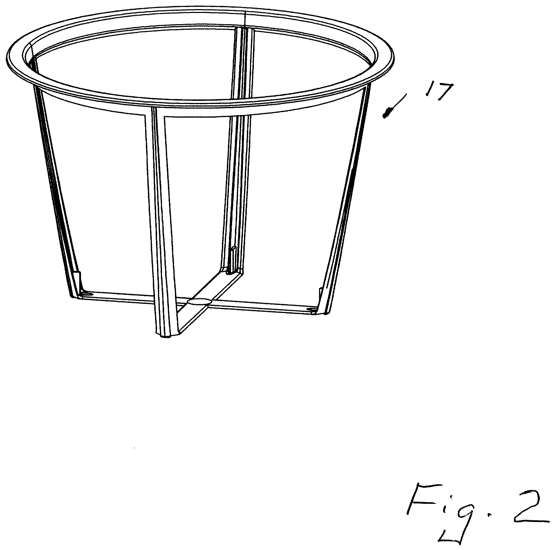

As in Fig. 1, here is shown an erected and formed packaging container 1 obtained with the method in accordance with the invention and consisting of a bottom 2 and from the bottom folded-up side walls 3-6, which are position-oriented and fixed relative to each other in the erected condition by liquid tight side joints 7-10. The side joints 7-10 consist of a suitable joint material, preferably a solidifiable plastic material such as a thermoplastic. The packaging container 1 has a circumferential container opening 11, which has an opening edge 12 which also consists of the same material that connects the side walls 3-6, i.e. in the preferred embodiment, the thermoplastic. Against the opening edge 12 may, when appropriate and not shown in the drawing here, a heat sealable foil lid and re-closable snap-on lid be fixed. The illustrated erected packaging container (as in Fig 1) is mainly slightly conical rectangular with round opening but can also have other shapes such as rectangular-rectangular (as in Fig. 1b), triangular, multi-angular, oval etc. The triangular embodiment would subsequently have the thermoplastic resin illustrated in Fig. 2 in the form of a strip formation 17 with only three legs.

As shown in the drawings, the opening edge 12 of thermoplastic resin is integrally formed with the side walls 3-6 liquid-tight uniting the side joints 7-10 of thermoplastic, which enclose the side wall edges 13-16 and their around extending opening edge 12, wherein the cohesive strip formation 17 of thermoplastic resin integrally extending from the opening edge 12 along the edge parts 13-16 of the side walls 3-6 and down to the bottom 2 of the container 1 while also creating a simultaneous fixation in position of all edge parts relative to each other. The sidewalls 3-6 consist in a first variant of a fiber-based packaging material 18 with at least one side coated with a heat sealable layer, wherein the thermoplastic mass joins and creates the side joints 7-10 of the packaging material and the integrally formed circumferential the opening edge 12. In another low cost variant, the cup is made of a packaging fiber based material without a sealable layer, which may be the case when the cup is to be used for dry products.

A preferred packaging container 1 can be achieved by a fiber based packaging material 18 in the form of a laminate, preferably having at least one side coated with a heat sealable layer, formed into a packaging container 1 in a mold 19, comprising two halves, of which either the one or the other is movable or fixed relative to each other and consisting of an outer part 20 and an inner part 21, for injection molding, in which a plastic melt of e.g. thermoplastic, liquid tight unites the side joints 7-10 of the packaging material 18 and create one with these undivided circumferential opening edge 12 of thermoplastic. In the described and illustrated example the bottom 2 and the side walls 3-6 of the packaging container 1 are created by one and the same fiber based packaging blank.

During forming, the packaging material 18 is shaped to a geometry defined by the three-dimensional shape of the mold, as in the depicted example with a fixed outer mold half or part 20 of the mold 19 and the movable inner part 21 of the mold 19 presses the packaging material 18 against the outer fixed part 20 of the mold 19, at the same time as the mold parts 20 and 21 thereby fix the packaging material 18 when finalizing the movement and lock the packaging material 18 in its final position lying against the outer part 20 of the mold 19, after which the plastic melt during injection fill first cavities 23, which are on the inside of the packaging material 18 and secondly those cavities 22, which are designed to accommodate the edges parts 13-16 of the side walls 3-6. The plastic melt fills these cavities 22, 23 without coming into contact with the outside of the packaging material 18 and connects the sidewalls 3-6 of the packaging material 18 to each other while forming the liquid tight joints 7-10 while the plastic melt also fills the cavities of the circumferential container opening 11 and by so then creating the liquid tight cup-shaped packaging container.

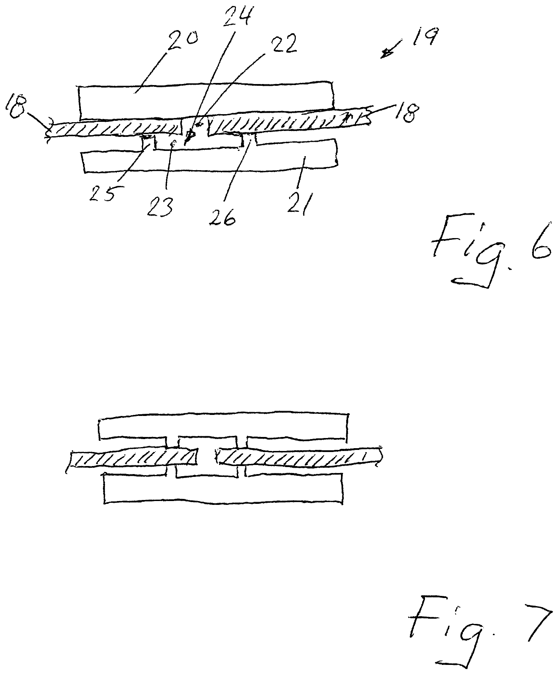

Fig. 6 shows a mold 19 in a schematic, partial cross-sectional view of the packaging container 1. The mold 19 comprises two halves, an outer part 20 and an inner part 21. The outer part 20 is designed with flat surfaces for receiving the packaging material 18 which is placed against the same without overlap. The inner part 21 comprises a longitudinal recess 24 provided with edges, said edges 25,26 are intended to push the packing material 18 between themselves and the outer part 20 of the mold 19, and are extending just outside and on each side along the side joints 7-10, said edges 25,26 when pressing against the packaging material 18 during the injection molding forming the inner, first cavities 23 inside of the second cavities 22, which are designed to accommodate the side joints 7-10 for enabling a filling of the plastic mass both between the side wall edge parts 13-16 of the side walls 3-6 and in the inner first cavities 23 forming the recesses 24.

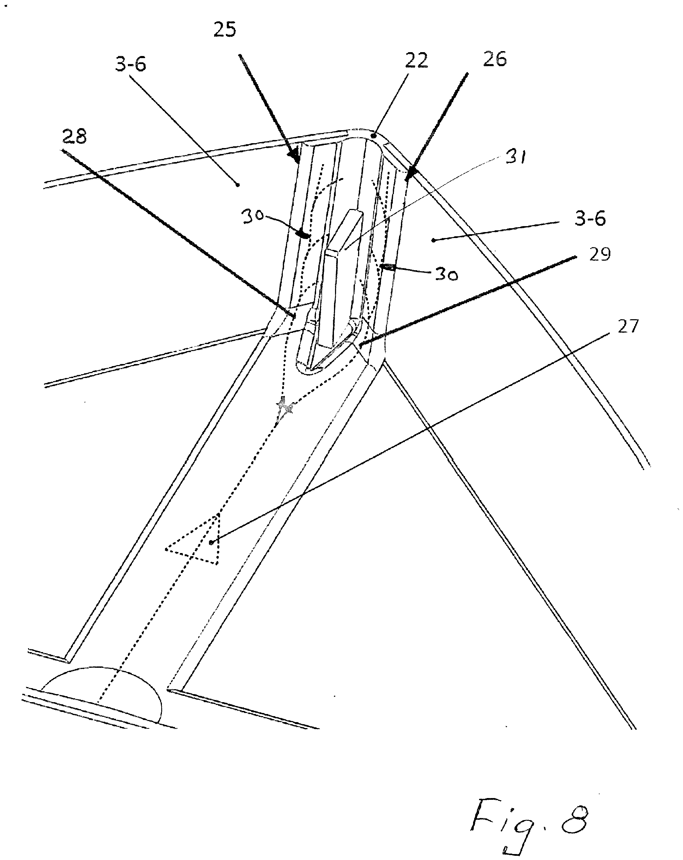

Fig. 8 is schematically showing the actual device of a packaging container 1 where the side walls 3-6 have been pressed against the outer part 20 of the mold 19 by incoming plastic melt 27 through flow channels 28-29, and so that the plastic melt from the injection point until it reaches the cavity 22 at the joining area, is distributed into two main flow channels 28-29 separated from each other and ending toward the edges 25,26 of the recess 24, so that the plastic melt thereby first fills the cavity 23 of the mold 19 closest to the edges 25,26 and only after that fills the cavity 22 at the joint area, by flowing of the plastic melt in upwards extending flow channels 30, so that the packaging material 18 is pressed against the outer part 20 of the mold 19 before the plastic melt 27 reaches the cavity 22 at the joint area, so that the forth coming wave front of the injected plastic melt presses the packaging material against the outer part 20 of the mold 19 before the plastic melt reaches the cavity 22 of the joint area, so that the plastic melt cannot enter the packaging material outside, which if it did would result in a container with appearance defects. Furthermore a protruding part 31, working as a stacking device for stacking multiple cups into each other, lowers the pressure of the plastic melt when reaching this point. The protruding part 31, located just adjacent to the packaging material side ends, creates a controlled deceleration of the rushing plastic flow, by the relatively large volume of the protruding part 31, which when filled with plastic melt lowers the pressure and thus creates a delay in the filling of the cavity which facilitates for the plastic flow to press the packaging material against the outer part 20 of the mold 19 while first thereafter is also filling the strip-formed legs and side joints 7-10 upwards.

## Claims

1. A method for manufacturing a packaging container (1) consisting of a bottom (2) and from this bottom up-folded side walls (3-6), which are fixable relative to each other in an erected state by liquid-tight side joints (7-10), wherein a fiber based packaging material (18) preferably having at least one side coated with a heat sealable layer is formed into said packaging container (1) in a mold (19) having two relative to each other moveable halves constituting an outer part (20) and an inner part (21) for injection molding in which a plastic melt of preferably thermoplastic, liquid-tight, joins the side walls (3-6) of the packaging material (18) with their edge parts (13-16) by said side joints (7-10) and creates a circumferential opening edge (12) of thermoplastic formed integrally with said side joints (7-10), said plastic melt during injection molding only fills first cavities (23) on the inside of the packing material and second cavities (22) designed to accommodate the edge parts (13-16) of the side walls (3-6), where the plastic melt during injection fills these cavities (22,23) without contact with the outside of the packaging material (18) and thus connects the sidewalls (3-6) of the packaging material with each other, while the plastic melt also fills the cavity of the circumferential opening edge (12) for the creation of a liquid tight cup shaped packaging container, whereby in case of injection molding of the packaging container, the side walls (3-6) of the packaging material are pressed against the outer part (20) of the mold (19) by the incoming plastic melt (27), which is controlled so that the plastic melt from the injection point until it reaches the cavity (23) is distributed into two main flow channels (28,29) separated from each other, and further up into the side joints (7-10) or in the so-called leg-formed cavities (23) and there branches into a plurality channels(30), that the molding outer part (20) of the mold (19) is designed with flat surfaces for receiving the packaging material (18) which is pressed directly against the same without overlapping, and that the inner part (21) of the mold (19) having edge provided longitudinal recesses (24), the edges (25,26) of which are intended to press the packaging material (18) between itself and the outer part (20) of the forming mold (19) and are extending just outside and on each side along the side joins (7-10), said edges (25,26) during their contact against the packaging material (18) will be pressed against said packaging material (18) during the injection molding and forming first cavities (23) between themselves within or inside second cavities (22), which are formed and intended to receive the side joints (7-10) of the packaging material (18) for enabling filling of the plastic mass both in between the edge parts (13-16) of the side walls (3-6) and in the first cavities (23), forming the recesses (24) located between the edges (25,26), **characterized in that** a protruding part (31), working as a stacking device for stacking multiple cups into each other, towers the pressure of the plastic melt when reaching this point, whereby the protruding part (31), located just adjacent to the packing material side ends, creates a controlled deceleration of rushing plastic flow, by a relatively large volume of the protruding part (31), which when filled with plastic melt lowers the pressure and thus creates a delay in the filling of the cavity, which facilitates for the plastic flow to press the packaging material against the outer part (20) of the mold (19), while first thereafter also fills the strip-formed legs and side joints (7-10) upwards.

## Patentansprüche

1. Ein Verfahren zur Herstellung eines Verpackungsbehälters (1) bestehend aus einem Boden (2) und von diesem Boden nach oben geklappte Seitenwänden (3-6), die im aufgestellten Zustand durch flüssigkeitsdichte Seitenverbindungsstellen (7-10) relativ zueinander fixierbar sind, wobei ein faserbasiertes Verpackungsmaterial (18), das vorzugsweise mindestens eine Seite aufweist, die mit einer wärmeversiegelbaren Schicht beschichtet ist, zum besagten Verpackungsbehälter (1) in einer Gussform (19) geformt wird, wobei die Gussform aus zwei relativ zueinander verschiebbaren Hälften besteht, die aus einem äußeren Teil (20) und einem inneren Teil (21) für das Spritzgießen gebildet werden, bei dem der Kunststoffschmelz, vorzugsweise flüssigkeitsdichtes Thermoplast, die Seitenwände (3-6) des Verpackungsmaterials (18) mit ihren Kantenteilen (13-16) über besagte Seitenverbindungsstellen (7-10) zusammenfügt; und
eine umlaufende Öffnungskante (12) aus Thermoplast erzeugt, die einstückig über den besagten Seitenverbindungsstellen (7-10) ausgebildet ist, wobei der besagte Kunststoffschmelz während des Spritzgießens nur die ersten Hohlräume (23) im Inneren des Verpackungsmaterials und die zweiten Hohlräume (22), die zum Aufnehmen der Kantenteile (13-16) der Seitenwände (3-6) ausgebildet sind, füllt, wobei der Kunststoffschmelz beim Einspritzen die Hohlräume (22,23) füllt, ohne dabei mit dem Äußeren des Verpackungsmaterials (18) in Berührung zu kommen; und somit die Seitenwände (3-6) des Verpackungsmaterials miteinander verbindet, während der Kunststoffschmelz auch die Hohlräume der umlaufenden Öffnungskante (12) füllt, um einen flüssigkeitsdichten, tassenförmigen Verpackungsbehälter zu formen, wobei im Falle des Spritzgießen des Verpackungsbehälters die Seitenwände (3-6) des Verpackungsmaterials gegen den äußeren Teil (20) der Gussform (19) durch den eintretenden Kunststoffschmelz gepresst werden; wobei der Kunststoffschmelz so kontrolliert wird, dass dieser vom Einspritzpunkt bis zum Erreichen des Hohlraums (23) in zwei Hauptfließkanäle (28,29), die voneinander getrennt sind, verteilt wird und nach oben in die Seitenverbindungsstellen (7-10) oder in die sogenannten beinförmigen Hohlräume (23) befördert wird und sich dort in einer Vielzahl von Kanälen (30) so verzweigt,
dass der formende äußere Teil (20) der Gussform (19) mit flachen Oberflächen für die Aufnahme des Verpackungsmaterials (18), das direkt gegen dieselbe gepresst wird ohne zu überlappen, ausgestaltet wird, und dass
der innere Teil (21) der Gussform (19) an den Kanten bereitstellende längliche Aussparungen (24) umfasst, deren Kanten (25,26) das Verpackungsmaterial (18) zwischen sich selbst und den äußeren Teil (20) der formenden Gussform (19) pressen soll und sich nur außerhalb und entlang der Seitenverbindungsstellen (7-10) ausdehnen soll, wobei
die besagten Kanten (25,26) beim Kontakt mit dem Verpackungsmaterial (18) gegen das vorgenannte Verpackungsmaterial (18) während des Spritzgießens gepresst werden und die ersten Hohlräume (23) zwischen ihnen innerhalb oder innerhalb zweiter Hohlräume (22) formen, die derart ausgestaltet und dafür beabsichtigt sind, die Seitenverbindungsstellen (7-10) des Verpackungsmaterials (18) aufzunehmen, um die Kunststoffmasse sowohl zwischen den Kantenteilen (13-16) der Seitenwände (3-6) als auch in die ersten Hohlräume (23) zu füllen, unter Ausbildung von Aussparungen (24) zwischen den Kanten (25,26), **dadurch gekennzeichnet, dass**
ein hervorstehender Teil (31), der als Stapeleinrichtung fungiert, um mehrere Tassen ineinander zu stapeln, den Druck der Kunststoffschmelze verringert, wenn dieser Punkt erreicht wird, wobei der hervorstehende Teil (31), der sich benachbart an den Seitenenden des Verpackungsmaterials befindet, eine kontrollierte Entschleunigung des fließenden Kunststoffflusses durch ein relativ großes Volumen des hervorstehenden Teils (31) schafft, dass, wenn mit der Kunststoffschmelze gefüllt, den Druck verringert und dadurch ein Verzug beim Füllen des Hohlraumes geschafft wird, was den Kunststofffluss unterstützt, das Verpackungsmaterial gegen den äußeren Teil (20) der Gussform (19) zu pressen, während erst danach auch die streifenförmigen Beine und Seitenverbindungsstellen (7-10) nach oben gefüllt werden.

## Revendications

1. Procédé de fabrication d'un récipient (1) d'emballage consistant en un fond (2) et en des parois (3 à 6) latérales, relevées par pliage à partir de ce fond, qui peuvent être immobilisées l'une par rapport à l'autre dans un état dressé par des jonctions (7 à 10) latérales étanches au liquide, une matière (18) d'emballage à base de fibre, ayant de préférence au moins une face revêtue d'une couche thermosoudable, étant conformée en le récipient (1) d'emballage dans un moule (19) ayant deux moitiés mobiles l'une par rapport à l'autre, constituant une partie (20) extérieure et une partie (21) intérieure pour un moulage par injection, dans lequel un plastique fondu, de préférence un thermoplastique, étanche au liquide, joint les parois (3 à 6) latérales de la matière (18) d'emballage, par leurs parties (13 à 16) de bord, par ces jonctions (7 à 10) latérales et crée un bord (12) circonférentiel d'ouverture de thermoplastique d'une seule pièce avec les jonctions (7 à 10) latérales, le plastique fondu pendant le moulage par injection remplissant seulement des premières cavités (23) à l'intérieur de la matière d'emballage et des deuxièmes cavités (22) conçues pour loger les parties (13 à 16) de bord des parois (3 à 6) latérales, le plastique fondu remplissant pendant l'injection ces cavités (22, 23), sans contact avec l'extérieur de la matière (18) d'emballage et reliant ainsi les parois (3 à 6) latérales de la matière d'emballage l'une à l'autre, tandis que le plastique fondu remplit aussi la cavité du bord (12) circonférentiel d'ouverture pour la création d'un conteneur d'emballage conformé en coupelle et étanche au liquide, dans lequel, dans le cas d'un moulage par injection du récipient d'emballage, les parois (3 à 6) latérales de la matière d'emballage sont pressées sur la partie (20) extérieure du moule (19) par le plastique (27) fondu arrivant, qui est réglée de manière à ce que le plastique fondu soit réparti, à partir du point d'injection jusqu'à ce qu'il atteigne la cavité (23), en deux canaux (28, 29) d'écoulement principaux séparés l'un de l'autre et en outre dans les jonctions (7 à 10) latérales ou dans ce que l'on appelle les cavités (23) en forme de jambage et, de là, se ramifie en une pluralité de canaux (30) en ce que la partie (20) extérieure de moulage du moule (19) est conçue en ayant des surfaces planes de réception de la matière (18) d'emballage, qui est pressée directement contre celle-ci sans chevauchement,
et en ce que la partie (21) intérieure du moule (19) a un bord pourvu de chambrages (24) longitudinaux, dont les bords (25, 26) sont destinés à presser la matière (18) d'emballage entre eux-mêmes et la partie (20) extérieure du moule (19) de formage et s'étendent juste à l'extérieur et de chaque côté le long des jonctions (7 à 10) latérales, les bords (25, 26) étant, pendant leur contact sur la matière (18) d'emballage, pressés sur la matière (18) d'emballage pendant le moulage par injection et formant les premières cavités (23) entre eux au sein ou à l'intérieur des deuxièmes cavités (22), qui sont formées et qui sont destinées à recevoir les jonctions (7 à 10) latérales de la matière (13) d'emballage pour permettre de remplir de la masse plastique à la fois entre les parties (13 à 16) de bord des parois (3 à 6) latérales et les premières cavités (23), en formant les chambrages (24) disposés entre les bords (25, 26), **caractérisé en ce qu'**une partie (31) en saillie, agissant comme dispositif d'empilage, pour empiler des coupelles multiples l'une dans l'autre, abaisse la pression du plastique fondu lorsqu'il atteint ce point, la partie (31) en saillie, disposée juste au voisinage des extrémités latérales de la matière d'emballage, créant une décélération réglée du courant de matière plastique brusque, par un volume relativement grand de la partie (31) en saillie, qui, lorsqu'elle est remplie du plastique fondu, abaisse la pression et crée ainsi un retard dans le remplissage de la cavité, qui facilite que l'écoulement de matière plastique presse la matière d'emballage contre la partie (20) extérieure du moule (19), tout en remplissant aussi ensuite les jambages en forme de bandes et les jonctions (7 à 10) latérales vers le haut.
